# FASCICULE DE BREVET EUROPEEN

(11) **EP 2 512 850 B1**
(45) Date de publication et mention de la délivrance du brevet: **18.12.2013**
(21) Numéro de dépôt: 10752055.3
(22) Date de dépôt: 20.07.2010
(51) Int. Cl.: B60J 5/10

(54) **PORTE DE COFFRE POUR VEHICULE AUTOMOBILE**
HECKKLAPPE EINES KRAFTFAHRZEUGES
MOTOR VEHICLE TRUNK LID

(30) Priorité: 16.12.2009 FR 0959030
(43) Date de publication de la demande: 24.10.2012
(73) Titulaire: Renault S.A.S., 92100 Boulogne-Billancourt (FR)
(72) Inventeur: GINESTET, Thierry, F-78180 Montigny Le Bretonneux (FR); GLAUMOT, Olivier, F-91470 Forges Les Bains (FR); REGNAULT, François, F-92300 Levallois Perret (FR)
(86) Numéro de dépôt international: PCT/FR2010/051528
(87) Numéro de publication internationale: WO 2011/073544

(56) Documents cités:
- EP-A1- 1 120 303
- EP-A1- 1 927 453
- DE-A1-102006 050 144
- DE-U1-202006 016 378
- US-A- 4 822 098

## Description

L'invention concerne de façon générale une porte de coffre pour véhicule automobile. L'invention concerne également un véhicule automobile comprenant une telle porte de coffre.

De l'art antérieur, on connaît le document US4822098 qui propose une porte de coffre de véhicule automobile. Cette porte de coffre comporte un membre extérieur, une lunette arrière, et un membre intérieur recouvrant en partie le membre extérieur. Le membre extérieur est constitué d'une partie supérieure qui définit une ouverture de lunette arrière et d'une partie inférieure qui prolonge la partie supérieure vers le bas de la porte de coffre. La vitre de lunette arrière est rapportée sur une surface complémentaire du membre extérieur. Les membres extérieur et intérieur coopèrent pour former un cadre creux, d'une section fermée, entourant la vitre de lunette arrière. Dans la partie inférieure de la porte de coffre, le membre extérieur coopère avec le membre intérieur pour former un caisson creux. Un inconvénient de cette porte de coffre ainsi constituée est qu'elle peut présenter une rigidité insuffisante. De plus, le membre extérieur peut ne pas être satisfaisant du point de vue esthétique, car le procédé de moulage d'une telle pièce en matière polymérique peut présenter des défauts d'aspects gênants de nos jours.

On connaît également le document EP1120303 qui propose une porte de coffre pour véhicule automobile comportant un renfort structurel, une lunette arrière, et une doublure intérieure (non représentée). Le renfort structurel est constitué d'une partie supérieure qui définit une ouverture de lunette arrière et d'une partie inférieure qui prolonge la partie supérieure vers le bas de la porte de coffre. La porte comporte également une série d'équipements fonctionnels du type charnières, serrure, moteur d'essuie-glace arrière, encadrement de lunette, ou encore plaque d'immatriculation. Dans ce document, le renfort structurel est également utilisé comme pièce de carrosserie vers l'extérieur et comme piste d'appui (piste d'étanchéité) vers l'intérieur. Un inconvénient de cette porte de coffre est que sa rigidité n'est pas satisfaisante, de sorte qu'il est préférable d'avoir des renforts métalliques additionnels, habituellement en acier, pour fixer ces équipements fonctionnels. Cette solution présente en fin de compte l'inconvénient d'une masse globale élevée pour la porte de coffre, principalement en raison de la présence des renforts métalliques. De plus, la multiplicité des éléments formant l'ensemble structurel, à savoir l'ensemble dédié à la reprise des efforts et procurant la rigidité requise à la porte, entraîne un assemblage complexe et coûteux.

Pour remédier au moins partiellement à ces inconvénients, l'invention a pour objet une porte de coffre pour véhicule automobile, comportant un renfort structurel, une doublure intérieure et une lunette arrière ; le renfort structurel est constitué d'une partie supérieure qui définit une ouverture de lunette arrière et d'une partie inférieure qui prolonge la partie supérieure vers le bas de la porte de coffre. Selon l'invention, le renfort structurel est réalisé d'une seule pièce en matériau polymérique, et il est recouvert de son côté extérieur par un ensemble constitué au moins de la lunette arrière, et d'un panneau d'habillage extérieur disposé sous la lunette arrière, de manière à recouvrir complètement le renfort structurel ; de plus, le renfort structurel est également recouvert complètement de son côté intérieur par la doublure intérieure, le renfort structurel et la doublure intérieure coopérant pour former un premier cadre creux, d'une première section fermée, entourant l'ouverture de lunette arrière, et pour former un deuxième cadre creux périphérique, d'une deuxième section fermée, qui se trouve à proximité des bord extérieurs de la porte de coffre.

L'invention présente donc une combinaison d'un renfort structurel et d'une doublure intérieure qui ensemble forment une structure rigide adaptée pour l'utilisation de matériaux polymériques (et plus particulièrement au matériau thermoplastique qui demeure souple même à l'état renforcé), et à un tel niveau qu'il n'est plus nécessaire d'avoir recours à des renforts métalliques rencontrés dans les réalisations de l'art antérieur. Cela procure des avantages en termes de simplification d'assemblage des divers éléments de la porte, en raison de la diminution du nombre de ces éléments. De plus, cette configuration spécifique procure des avantages en termes de masse et de coût, et élargit encore davantage les possibilités de recyclage dans le cas où on adopte un matériau thermoplastique pour fabriquer le renfort structurel et/ou la doublure intérieure. Un autre avantage est qu'une telle porte, vue depuis l'extérieur du véhicule, présente un aspect esthétique d'un niveau équivalent à celui d'une porte de coffre fabriquée en tôle d'un matériau métallique.

Enfin, par rapport aux solutions de l'art antérieur intégrant des renforts métalliques rapportés, le renfort structurel en matériau polymérique permet d'augmenter l'inertie dans les sections travaillantes, et offre par ailleurs la possibilité de présenter un encadrement de lunette, également dit piste d'encollage de lunette, continu sur tout son pourtour.

Dans la porte de coffre selon l'invention, ce renfort structurel peut présenter une géométrie telle qu'il présente une périphérie sensiblement identique à la périphérie de cette porte de coffre. En d'autres termes, la géométrie du renfort structurel d'une seule pièce, réalisé en matériau polymérique, présente une géométrie sensiblement identique à celle de la porte.

De préférence, la partie supérieure du renfort structurel comporte des montants latéraux de part et d'autre de l'ouverture de lunette arrière, et/ou un montant supérieur disposé au dessus de l'ouverture de lunette arrière ; et le renfort structurel et la doublure intérieure peuvent coopérer pour former des premier et deuxième cadres creux de première et deuxième sections fermées, les sections étant confondues au niveau des montants latéraux et/ou au niveau du montant supérieur de l'ouverture de la lunette arrière.

De préférence, lesdites sections fermées comprennent une partie de forme creuse (appelée un « corps creux ») qui appartient au renfort structurel, dont le creux est orienté vers l'intérieur du véhicule, et prolongée d'une zone de liaison de chaque côté de la forme creuse, et d'autre part une partie de la doublure intérieure, qui referme la partie de forme creuse du renfort par fixation au niveau des zones de liaison.

D'autre part, l'invention a également pour objet un véhicule automobile comprenant une porte de coffre telle que décrite ci-dessus.

D'autres avantages et caractéristiques de l'invention apparaîtront dans la description détaillée, non limitative, ci-dessous.

La description sera faite au regard des dessins annexés parmi lesquels :
- la figure 1 représente une vue en perspective d'une porte de coffre pour véhicule automobile, du côté extérieur du véhicule ;
- la figure 2 représente une vue en perspective du renfort structurel de la porte de coffre, du côté intérieur du véhicule ;
- la figure 3 représente une vue en perspective de la doublure intérieure, du côté intérieur du véhicule ;
- la figure 4 est une vue en perspective schématisant une étape du procédé d'assemblage de la porte de coffre montrée sur la figure 1, du côté extérieur du véhicule ;
- la figure 5 représente en vue en section prise selon le plan P5 de la figure 1, P5 étant un plan sensiblement horizontal passant par un panneau d'habillage extérieur agencé sous la lunette de la porte de coffre ;
- la figure 6 représente en vue en section prise selon le plan P6 de la figure 1, P6 étant un plan sensiblement horizontal passant par la lunette de la porte de coffre ;
- la figure 7 représente en vue en section prise selon le plan P7 de la figure 1, P7 étant un plan sensiblement vertical passant par la serrure de la porte de coffre ; et
- la figure 8 représente en vue en section prise selon le plan P8 de la figure 1, P8 étant un plan sensiblement vertical passant par le moteur d'essuie-glace arrière de la porte de coffre.
- la figure 9 représente en vue en section prise selon le plan P9 de la figure 1, P9 étant un plan sensiblement vertical passant par la partie supérieure de la porte de coffre.

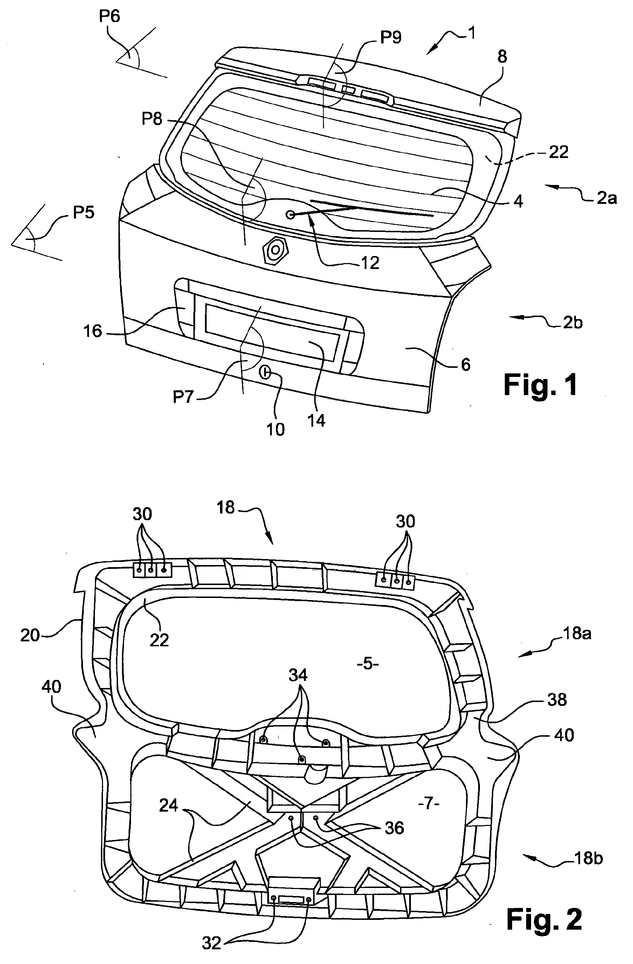

En référence tout d'abord à la figure 1, on peut apercevoir une porte de coffre 1 pour véhicule automobile. La porte de coffre **1** comporte une partie supérieure **2a** qui peut être sensiblement inclinée par rapport aux directions longitudinale et verticale, et qui se prolonge vers le bas par une partie inférieure **2b** qui peut être sensiblement verticale.

La porte de coffre **1** comporte une pluralité d'éléments assemblés entre eux par l'une ou plusieurs des techniques conventionnelles connues de l'homme de l'Art parmi lesquelles on compte le collage, le vissage, le bouterollage, l'agrafage, le rivetage, le clipsage, le soudage par laser ou par ultrasons, etc.

Parmi ces éléments, on retrouve d'une part, en référence aux figures 1 à 5, un renfort structurel **18,** une doublure intérieure **42,** et une lunette arrière **4.** La doublure intérieure **42** et la lunette arrière **4** se rapportent fixement sur le renfort structurel **18.** De même, un panneau d'habillage extérieur **6** agencé sous la lunette **4** est rapporté fixement sur le renfort structurel **18.** Au besoin, des éléments d'habillage additionnels peuvent être également rapportés fixement sur le renfort structurel **18,** comme par exemple le becquet **8** qui se trouve au-dessus de la vitre de lunette arrière **4** dans ce mode de réalisation de porte de coffre. Ces éléments additionnels sont utilisés pour recouvrir complètement le renfort structurel **18.**

La lunette arrière **4** se situe dans la partie supérieure **2a,** tandis que le panneau d'habillage extérieur **6** se situe dans la partie inférieure **2b** de la porte de coffre **1.**

D'autre part, la porte **1** peut intégrer une pluralité d'équipements fonctionnels. Ces équipements sont fixés sur le renfort structurel **18.** Parmi ces équipements, on peut compter des charnières (non représentées) destinées à l'articulation de la porte de coffre **1** sur la caisse du véhicule, une serrure de porte **10** permettant l'ouverture et la fermeture ainsi que le verrouillage et déverrouillage de la porte, et un système d'essuie-glace arrière **12** comportant un moteur d'entraînement.

D'autres équipements (non visible sur les figures) peuvent également être prévus sur la porte **1,** tels qu'un ensemble d'équilibrage de la porte **1** facilitant son ouverture / fermeture, des moyens de butée de fin de course de fermeture de la porte **1,** destinés à entrer en butée avec la caisse du véhicule automobile lors de la fermeture de la porte de coffre **1,** dans le but de stopper sa course, un système vidéo de recul, des éléments du système audio du véhicule, des feux arrières embarqués, etc...

Le renfort structurel **18** est réalisé d'une seule pièce en matériau polymérique. Par polymérique, on comprendra des matériaux de type thermoplastique ou thermodurcissable. Il est tout d'abord noté que le renfort structurel **18** est destiné à constituer l'ensemble de la structure de la porte de coffre **1,** les autres éléments de la porte ne disposant que d'une fonction d'habillage ou d'équipement, à l'exception toutefois de la doublure intérieure **42** comme on le verra ci-après.

Le renfort structurel **18** dispose d'une géométrie sensiblement identique à celle de la porte **1,** et, en particulier, sa périphérie **20** est sensiblement identique à la périphérie de cette porte de coffre **1.**

Le renfort structurel **18** présente globalement une partie supérieure **18a** qui définit une ouverture **5** de lunette arrière, et une partie inférieure **18b** qui prolonge la partie supérieure vers le bas de la porte de coffre 1. La partie supérieure **18a** comporte notamment des montants latéraux disposés de part et d'autre de l'ouverture **5** de lunette arrière, ainsi qu'un montant supérieur disposé au-dessus de l'ouverture **5** de lunette arrière.

Le renfort structurel **18** présente globalement un premier cadre qui entoure l'ouverture de lunette arrière, et un deuxième cadre périphérique qui se trouve à proximité des bords extérieures de la porte de coffre **1.** Le premier cadre et le deuxième cadre périphérique sont de forme creuse. Les formes creuses sont orientées vers l'intérieur du véhicule, c'est-à-dire en direction de la doublure intérieure **42.** La forme creuse procure de l'inertie à la pièce, afin d'augmenter sa rigidité, et sa résistance à des moments de torsion et de flexion par exemple. Le premier cadre et le deuxième cadre périphérique possèdent respectivement une première et une deuxième section. En référence à la figure 2, ces sections peuvent être confondues au niveau des montants latéraux et/ou du montant supérieur de la partie supérieure **18a.** C'est-à-dire que le premier cadre de forme creuse et le deuxième cadre de forme creuse peuvent être confondus au niveau des montants latéraux et/ou du montant supérieur de la partie supérieure **18a.** Dans ce mode de réalisation, on se retrouve alors avec une partie supérieure **18a** en forme de cadre (le cadre supérieur) et une partie inférieur **18b** en forme de cadre (la cadre inférieur) qui partagent un même côté horizontal agencé sensiblement au niveau de la séparation entre les parties supérieure **18a** et inférieure **18b** du renfort structurel **18,** sous l'ouverture **5** de lunette arrière (le cadre supérieur **18a** entoure l'ouverture **5** de lunette arrière, tandis que le cadre inférieure **18b** entoure une autre ouverture **7**).

Le premier cadre qui s'étend sur toute la partie supérieure **18a** du renfort **18,** présente antérieurement un encadrement **22** de lunette formant une piste d'encollage sur laquelle la lunette **4** peut être montée fixement. Du fait de la réalisation en une seule pièce du renfort structurel **18,** l'encadrement **22** de lunette est avantageusement continu sur tout son pourtour.

Dans la partie inférieure **18b,** le renfort structurel **18** peut présenter des renforts additionnels, par exemple deux renforts additionnels **24** disposés en X dans l'ouverture **7** et reliant le côté horizontal inférieur du premier cadre au côté horizontal inférieur du deuxième cadre périphérique. Dans le mode de réalisation présenté, les deux renforts additionnels **24** sont disposés dans le cadre inférieur **18b.** Bien entendu, le nombre et la disposition de ces renforts additionnels peuvent être adaptés en fonction des besoins rencontrés, sans sortir du cadre de l'invention.

D'autre part, chacun des cadres et des renforts peut être équipé de nervures réalisées d'une seule pièce avec ceux-ci, afin d'augmenter la rigidité intrinsèque du renfort structurel **18.** En effet, grâce à l'invention, on utilise un renfort structurel dans lequel on peut rigidifier localement les zones d'implantation des éléments fonctionnels décrits ci-dessus. Ces rigidifications concernent par exemple l'emploi de nervures et/ou d'augmentation d'épaisseur. L'avantage est que ces rigidifications locales, bien qu'ayant un impact sur l'aspect extérieur du renfort, ne seront pas visible depuis le côté extérieur et intérieur de la porte de coffre **1.**

Des moyens de fixation de différents équipements de la porte de coffre **1** sont ainsi directement prévus sur le renfort structurel **18** d'une seule pièce. Il s'agit en particulier de moyens de fixation **30** des charnières, disposés sur le côté supérieur horizontal du cadre supérieur **18a,** de moyens de fixation **32** de la serrure, disposés sur le côté inférieur horizontal du cadre inférieur **18b,** de moyens de fixation **34** du moteur d'essuie-glace arrière, disposés sur le côté horizontal commun aux deux cadres **18a, 18b,** de moyens de fixation **36** de la plaque d'immatriculation, disposés à l'intersection des renforts **24,** et de moyens de fixation **38** de l'ensemble d'équilibrage de la porte, disposés sur un côté latéral du cadre supérieur **18a.** De préférence, chacun de ces moyens de fixation prend la forme d'un ou plusieurs trous dans l'ensemble structurel **18,** ces trous, traversant ou non, étant destinés à recevoir des moyens de fixation complémentaires, telles que des vis ou autres éléments conventionnels pour la solidarisation des équipements concernés.

Sur la figure 1, le renfort structurel **18** monobloc n'est pas visible car il est complètement recouvert de son côté extérieur par la lunette arrière **4,** le panneau d'habillage extérieur **6,** et le becquet **8,** de manière à le recouvrir complètement. L'ensemble structurel **18** n'est donc pas visible sur la figure 1, étant donné qu'en vue de derrière à l'extérieur du véhicule, il est entièrement masqué par les éléments d'habillage précités **4, 6, 8,** ce qui lui permet par ailleurs avantageusement de ne disposer d'aucune fonction esthétique, et donc de présenter une conception optimisée, entièrement dédiée à sa fonction structurelle, pour apporter la rigidité nécessaire à une telle porte de coffre, en particulier avec l'emploi d'un matériau thermoplastique.

De même, le renfort structurel **18** est complètement recouvert de son côté intérieur par la doublure intérieure **42.** De plus, et selon l'invention, le renfort structurel **18** et la doublure intérieure **42** coopèrent pour former un premier cadre creux, d'une première section fermée, entourant l'ouverture **5** de lunette arrière, et pour former un deuxième cadre creux périphérique, d'une deuxième section fermée, qui se trouve à proximité des bord extérieurs de la porte de coffre **1.** On bénéficie ainsi d'une structure à cadre globalement fermée à la périphérie des bords extérieurs de la porte de coffre **1,** ainsi qu'à la périphérie de l'ouverture de lunette arrière. Cette structure apporte la rigidité nécessaire à ce type de porte de coffre **1.**

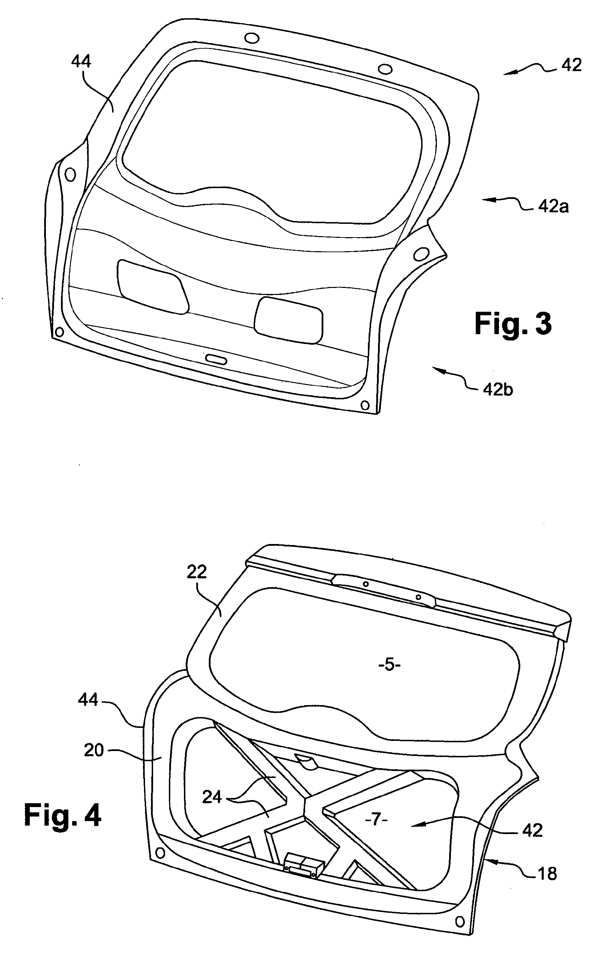

La doublure intérieure **42** est réalisée d'une seule pièce en matériau polymérique. La figure 3 montre la doublure intérieure d'habillage **42,** dont la forme est sensiblement identique à celle du renfort structurel **18,** sur lequel elle est destinée à être rapportée fixement. Plus précisément, elle présente une partie supérieure en forme de cadre **42a** dont les dimensions sont sensiblement identique au premier cadre **18a** du renfort structurel **18,** la cadre **42a** étant prolongé vers le bas par un panneau inférieur **42b** dont la périphérie est sensiblement identique à celle du deuxième cadre périphérique dans la partie inférieure **18b** du renfort structurel **18.** Ainsi, la doublure intérieure **42** recouvre entièrement le côté intérieur du renfort structurel 18, et elle dispose aussi d'une géométrie sensiblement identique à celle de la porte **1,** et, en particulier, sa périphérie **44** est sensiblement identique à la périphérie de cette porte de coffre **1.** Si d'éventuelles ouvertures sont nécessaires dans la doublure intérieure **42,** par exemple pour permettre d'accéder à des équipements de la porte de coffre 1, elles peuvent alors être recouvertes par des éléments additionnels d'habillage intérieur.

La doublure intérieure **42** monobloc peut comporter une piste d'étanchéité globalement continue destinée à coopérer avec un joint d'étanchéité du véhicule (non représenté). Il est à noter que l'inverse est également possible, en ce sens qu'un joint d'étanchéité peut être monté sur une nervure périphérique formée sur la doublure intérieure **42,** ce joint étant alors apte à venir en appui contre une piste d'étanchéité du véhicule.

La doublure intérieure **42** possède ainsi trois fonctions principales : une fonction d'aspect (fonction esthétique), car la doublure vient former le côté intérieur de la porte de coffre **1,** c'est-à-dire le côté qui se trouve dans le véhicule lorsque la porte de coffre **1** est fermée ; une fonction d'étanchéité par la coopération de la piste d'étanchéité (non représentée) globalement continue avec le joint d'étanchéité monté sur le véhicule ; et une fonction structurelle, puisqu'elle coopère avec le renfort structurel **18** pour apporter la rigidité nécessaire à ce type de porte, dans la limite du respect de sa fonction d'aspect qui dépend également du type de matériau utilisé.

Les géométries de la doublure **42** et du renfort structurel **18** sont similaires. Ces deux éléments sont parfaitement assemblés en étant superposés l'un sur l'autre, comme le montre la figure 4. Ensemble, ils forment une structure à cadres fermés à la périphérie de la porte de coffre **1,** ainsi que le long de l'encadrement de lunette. En d'autres termes, leurs périphéries respectives **20, 44,** correspondant à la périphérie de la porte de coffre **1** sont assemblées tout le long de ces périphéries, de même que ces deux éléments **18, 42** sont assemblés tout le long de l'encadrement de lunette **22.**

Le renfort structurel **18** et la doublure intérieure **42** coopèrent ainsi pour former un premier cadre creux, d'une première section fermée, entourant l'ouverture de lunette arrière, et pour former un deuxième cadre creux périphérique, d'une deuxième section fermée, qui se trouve à proximité des bords extérieurs de la porte de coffre **1.** Conformément au mode de réalisation du renfort structurel **18** présenté ci-dessus, la première section fermée et la deuxième section fermée peuvent être confondues au niveau des montants latéraux et/ou du montant supérieur de l'ouverture **5** de la lunette arrière.

Lesdites sections fermées comprennent ainsi d'une part une partie du renfort structurel **18,** et d'autre part une partie de la doublure intérieure **42,** qui referme la partie du renfort **18.**

La partie du renfort structurel **18** est de forme creuse, comme il a été décrit ci-avant, dont le creux est orienté vers l'intérieur du véhicule, et la forme creuse est prolongée par une zone de liaison de chaque côté de celle-ci. II est à noter que les renforts **24** décrits ci-dessus peuvent également présenter cette partie de forme creuse avec une zone de liaison de chaque côté recevant une partie de la doublure intérieure **42.**

La partie de la doublure intérieure **42** referme la partie du renfort **18** par fixation au niveau des zones de liaison. On privilégiera une fixation de type continue en mettant par exemple en contact les zones de liaison présentées sous forme de pistes globalement continues avec des zones correspondantes de la doublure intérieure **42.** Cette configuration est adaptée à un procédé d'assemblage par soudage laser ou par vibrations, procédé d'assemblage dans lesquels on a besoin d'avoir les surfaces en contact.

Conformément au mode de réalisation présenté dans les figures, et notamment à la figure 2, le renfort structurel **18** comporte 3 « pistes » ; la première piste se trouve à la périphérie du renfort structurel **18 ;** la deuxième piste se trouve à la périphérie de l'ouverture **5** de lunette arrière ; et la troisième piste se trouve à la périphérie de l'ouverture **7** formée dans la partie inférieure **18b** du renfort structurel **18,** du côté intérieur du cadre inférieur **18b.**

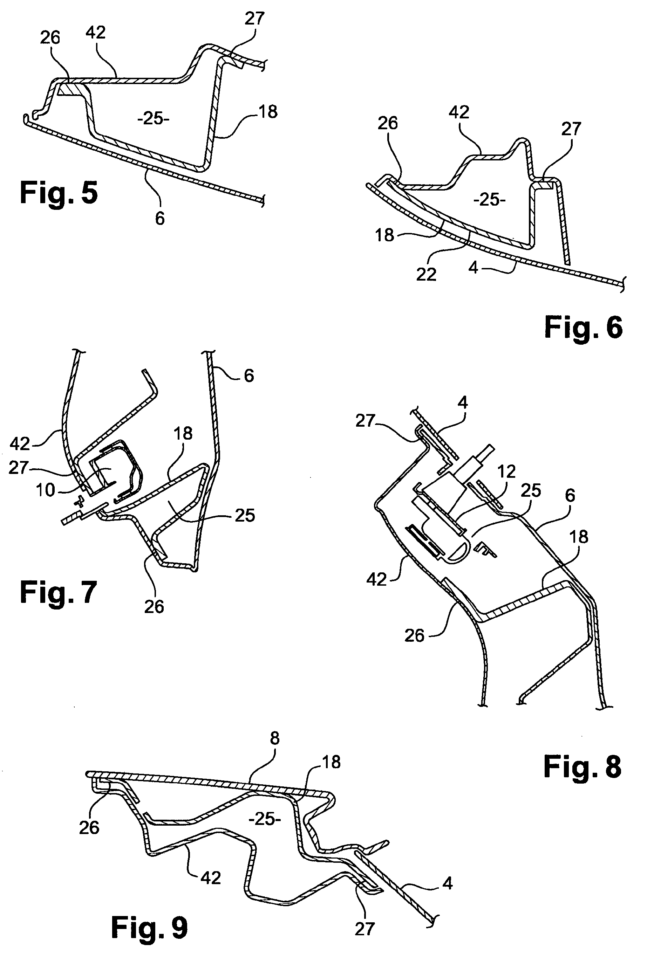

Des exemples d'assemblage entre le renfort structurel **18** et la doublure intérieure **42** pour former les cadres creux sont représentés aux figures 5 à 9 représentant des coupes selon les plans P5 à P9 de la figure 1. Dans chacune de ces figures, on retrouve le renfort structurel **18** et la doublure intérieure **42.** On retrouve également la partie **25** en forme de creux, et les zones de liaison **26** et **27** de part et d'autre de la partie creuse **25** du renfort structurel **18.** Les zones de liaison **26** et **27** forment des pattes ou portions de patte recevant une partie de la doublure intérieure **42.** Il s'agit de mettre les éléments par exemple en regard, ou en surface contre surface pour un assemblage par collage ou encore par soudage laser ou vibrations. A cet égard, les liaisons mécaniques entre les zones de liaison du renfort structurel **18** et la doublure intérieure **42** qui sont seulement en regard (voir par exemple la figure 9, et la figure 8 pour la zone de liaison **27)** ou en contact avec ces zones (voir par exemple les figures 5 à 8) peuvent être choisies parmi des solutions conventionnelles connues de l'homme du métier. Dans le cas où on utilise un procédé d'assemblage par bouterollage, les surfaces ne sont pas en contact continu, mais plutôt en contact ponctuel, procédé auquel on rajoute ensuite un cordon d'un matériau adapté pour réaliser l'étanchéité de l'assemblage.

Toutefois, et conformément à la figure 8, on peut apercevoir que la partie en forme de creux **25** du renfort structurel **18** peut également présenter une ouverture quand cela est nécessaire, par exemple pour permettre le passage d'éléments fonctionnels tels que le moteur d'essuie-glace **12.** Cet aménagement peut alors générer des sections qui localement ne sont pas tout à fait fermées au sens strict du terme, mais qui sont prévues ainsi pour ne pas nuire à la solidité globale de l'assemblage entre le renfort structurel **18** et la doublure intérieure **42.**

Sur la figure 5, on peut voir que l'assemblage de la porte se poursuit par le montage du panneau d'habillage extérieur **6** sur le deuxième cadre périphérique du renfort structurel **18** dans sa partie inférieure **18b,** disposant de dimensions approximativement identiques à celle de ce cadre pour le recouvrir complètement dans la partie inférieure **18b.**

Sur la figure 9, le becquet **8** est monté sur le renfort structurel **18,** placé au-dessus de la lunette **4.** La lunette **4** est rapportée sur l'encadrement **22** prévu à cet effet, comme visible sur la figure 1.

La figure 6 prise selon le plan P6 de la figure 1 montre l'assemblage entre les éléments **4, 18** et **42** de la porte, au niveau d'un montant latéral de la partie supérieure **18a** du renfort structurel **18.** Elle représente également une partie du cadre creux de section fermée obtenu entre l'ensemble **18** et la doublure **42** (ladite section provenant de la première section et de la deuxième section qui sont confondues dans ce mode de réalisation), mais aussi l'encadrement de lunette **22** sur lequel est rapporté fixement et de façon étanche la lunette **4,** à l'aide d'un cordon de colle (non représenté). Sur cette figure, on peut apercevoir qu'une portion de paroi du renfort structurel **18** forme d'un côté la surface de l'encadrement de lunette **22** et de l'autre côté la surface de fond de la partie en forme de creux, ce qui permet de solidariser directement la vitre de lunette arrière **4** sur le cadre formé par le renfort structurel **18** et de la doublure intérieure **42,** apportant ainsi une rigidité accrue grâce au concours de la lunette arrière collée.

La figure 7 prise selon le plan P7 de la figure 1 montre l'assemblage entre les éléments **6, 18.et 42** de la porte, au niveau de la serrure **10.** Elle représente la serrure **10** montée fixement sur le renfort structurel **18** et traversant ce dernier ainsi que la doublure **42,** à travers des orifices.

Enfin, la figure 8 prise selon le plan P8 de la figure 1 montre l'assemblage entre les éléments **4, 6, 18** et **42** de la porte, au niveau du moteur du système d'essuie-glace arrière **12,** ce moteur étant de préférence situé au sein de la partie creuse **25.** Elle représente le moteur **12** monté fixement sur l'ensemble structurel **18** et traversant ce dernier ainsi que la lunette **4,** à travers des orifices.

Bien entendu, diverses modifications peuvent être apportées par l'homme du métier à l'invention qui vient d'être décrite uniquement à titre d'exemples non limitatifs. Par exemple en figure 6 ou 9, le creux **25** et les zones de liaison **26** et **27** pourraient être dédoublés de manière à former distinctement le premier cadre creux qui entoure l'ouverture **5** de lunette arrière et le deuxième cadre creux périphérique. Dans ce mode de réalisation qui peut présenter un encombrement plus important, chaque creux peut comporter ses zones de liaison de part et d'autre, et les zones de liaison se trouvant entre les deux creux peuvent être confondues. On aurait ainsi deux pistes d'assemblage entourant l'ouverture de lunette arrière au lieu d'une seule correspondant au mode de réalisation présenté dans les figures.

La porte de coffre selon l'invention présente ainsi l'avantage d'être légère, d'environ 20% par rapport à une porte de coffre en tôle d'acier, de présenter une rigidité prévue pour l'usage qui en est prescrit sans avoir recours à des pièces de structures complémentaires en métal, un aspect esthétique au niveau des portes de coffre en tôle métallique, une excellente recyclabilité (en thermoplastique), et ce pour un coût qui ne dépasse pas celui d'une porte de coffre en tôle.

## Revendications

1. Porte de coffre (1) pour véhicule automobile, comprenant un renfort structurel (18), une doublure intérieure (42), et une lunette arrière (4), le renfort structurel (18) étant constitué d'une partie supérieure (18a) qui définit une ouverture de lunette arrière et d'une partie inférieure (18b) qui prolonge la partie supérieure (18a) vers le bas de la porte de coffre (1), **caractérisée en ce qu'**elle comporte un renfort structurel (18) qui est réalisé d'une seule pièce en matériau polymérique, le renfort structurel (18) étant recouvert de son côté extérieur au moins par la lunette arrière (4), et d'un panneau d'habillage extérieur (6) disposé sous la lunette arrière (4), de manière à recouvrir complètement le renfort structurel (18), et **en ce qu'**elle comporte un renfort structurel (18) qui est recouvert complètement de son côté intérieur par la doublure intérieure (42), le renfort structurel (18) et la doublure intérieure (42) coopérant pour former un premier cadre creux, d'une première section fermée, entourant l'ouverture de lunette arrière, et pour former un deuxième cadre creux périphérique, d'une deuxième section fermée, qui se trouve à proximité des bord extérieurs de la porte de coffre (1).

2. Porte de coffre (1) selon la revendication 1, **caractérisée en ce qu'**elle comporte un renfort structurel (18) dont la partie supérieure (18a) comporte des montants latéraux de part et d'autre de l'ouverture de lunette arrière, et **en ce qu'**elle comporte un renfort structurel (18) et une doublure intérieure (42) qui coopèrent pour former des premier et deuxième cadres creux de première et deuxième sections fermées, les sections étant confondues au niveau des montants latéraux.

3. Porte de coffre (1) selon la revendication 1 ou 2, **caractérisée en ce qu'**elle comporte un renfort structurel (18) dont la partie supérieure (18a) comporte un montant supérieur disposé au dessus de l'ouverture de lunette arrière, et **en ce qu'**elle comporte un renfort structurel (18) et une doublure intérieure (42) qui coopèrent pour former des premier et deuxième cadres creux de première et deuxième sections fermées, les sections étant confondues au niveau du montant supérieur de l'ouverture de la lunette arrière.

4. Porte de coffre (1) selon l'une quelconque des revendications précédente, **caractérisée en ce qu'**elle comporte un renfort structurel (18) et une doublure intérieure (42) qui coopèrent pour former des premier et deuxième cadres creux de première et deuxième sections fermées, lesdites sections comprenant d'une part une partie de forme creuse qui appartient au renfort structurel (18), dont le creux est orienté vers l'intérieur du véhicule, et prolongée d'une zone de liaison de chaque côté de la forme creuse, et d'autre part une partie de la doublure intérieure (42), qui referme la partie de forme creuse du renfort (18) par fixation au niveau des zones de liaison.

5. Porte de coffre (1) selon l'une quelconque des revendications précédente, **caractérisée en ce qu'**elle comporte une doublure intérieure (42) qui recouvre complètement le renfort structurel (18), et qui comporte une piste d'étanchéité globalement continue destinée à coopérer avec un joint d'étanchéité du véhicule.

6. Porte de coffre (1) selon l'une quelconque des revendications précédente, **caractérisée en ce qu'**elle comporte en outre, rapporté fixement sur le renfort structurel (18) au-dessus de ladite lunette (4), un becquet (8) réalisé dans un matériau polymérique, de préférence thermoplastique ou thermodurcissable.

7. Porte de coffre (1) selon l'une quelconque des revendications précédente, **caractérisée en ce qu'**elle comporte un renfort structurel (18) qui présente des renforts additionnels, reliant le côté horizontal inférieur du premier cadre au côté horizontal inférieur du deuxième cadre périphérique.

8. Véhicule automobile **caractérisé en ce qu'**il comporte une porte de coffre selon l'une des revendications précédentes.

## Patentansprüche

1. Hecktür (1) für ein Kraftfahrzeug, die eine Strukturverstärkung (18), ein Innenblech (42) und ein Heckfenster (4) enthält, wobei die Strukturverstärkung (18) aus einem oberen Teil (18a), der eine Heckfensteröffnung definiert, und aus einem unteren Teil (18b) besteht, der den oberen Teil (18a) zum unteren Bereich der Hecktür (1) verlängert, **dadurch gekennzeichnet, dass** sie eine Strukturverstärkung (18) aufweist, die aus einem Stück aus Polymermaterial hergestellt ist, wobei die Strukturverstärkung (18) an ihrer Außenseite mindestens vom Heckfenster (4) und von einer Außenverkleidungsplatte (6) abgedeckt wird, die unter dem Heckfenster (4) angeordnet ist, um die Strukturverstärkung (18) vollständig abzudecken, und dass sie eine Strukturverstärkung (18) aufweist, die an ihrer Innenseite vollständig vom Innenblech (42) abgedeckt wird, wobei die Strukturverstärkung (18) und das Innenblech (42) zusammenwirken, um einen ersten Hohlrahmen mit einem ersten geschlossenen Profil zu formen, der die Heckfensteröffnung umgibt, und um einen zweiten umlaufenden Hohlrahmen mit einem zweiten geschlossenen Profil zu formen, der sich in der Nähe der Außenränder der Hecktür (1) befindet.

2. Hecktür (1) nach Anspruch 1, **dadurch gekennzeichnet, dass** sie eine Strukturverstärkung (18) aufweist, deren oberer Teil (18a) zu beiden Seiten der Heckfensteröffnung Seitenholme aufweist, und dass sie eine Strukturverstärkung (18) und ein Innenblech (42) aufweist, die zusammenwirken, um erste und zweite Hohlrahmen mit ersten und zweiten geschlossenen Profilen zu formen, wobei die Profile sich im Bereich der Seitenholme vereinigen.

3. Hecktür (1) nach Anspruch 1 oder 2, **dadurch gekennzeichnet, dass** sie eine Strukturverstärkung (18) aufweist, deren oberer Teil (18a) einen oberen Holm aufweist, der über der Heckfensteröffnung angeordnet ist, und dass sie eine Strukturverstärkung (18) und ein Innenblech (42) aufweist, die zusammenwirken, um erste und zweite Hohlrahmen mit ersten und zweiten geschlossenen Profilen zu formen, wobei die Profile sich im Bereich des oberen Holms der Öffnung des Heckfensters vereinigen.

4. Hecktür (1) nach einem der vorhergehenden Ansprüche, **dadurch gekennzeichnet, dass** sie eine Strukturverstärkung (18) und ein Innenblech (42) aufweist, die zusammenwirken, um erste und zweite Hohlrahmen mit ersten und zweiten geschlossenen Profilen zu formen, wobei die Profile einerseits einen Hohlformteil, der zur Strukturverstärkung (18) gehört, dessen Höhlung zur Innenseite des Fahrzeugs gerichtet ist und der von einer Verbindungszone auf jeder Seite der Hohlform verlängert wird, und andererseits einen Teil des Innenblechs (42) enthalten, der den Hohlformteil der Verstärkung (18) durch Befestigung im Bereich der Verbindungszonen verschließt.

5. Hecktür (1) nach einem der vorhergehenden Ansprüche, **dadurch gekennzeichnet, dass** sie ein Innenblech (42) aufweist, das die Strukturverstärkung (18) vollständig abdeckt und das einen global durchgehenden Dichtungsstreifen aufweist, der dazu bestimmt ist, mit einer Dichtung des Fahrzeugs zusammenzuwirken.

6. Hecktür (1) nach einem der vorhergehenden Ansprüche, **dadurch gekennzeichnet, dass** sie außerdem fest an die Strukturverstärkung (18) oberhalb des Heckfensters (4) angefügt einen Spoiler (8) aus einem vorzugsweise thermoplastischen oder wärmehärtbaren Polymermaterial aufweist.

7. Hecktür (1) nach einem der vorhergehenden Ansprüche, **dadurch gekennzeichnet, dass** sie eine Strukturverstärkung (18) aufweist, die zusätzliche Verstärkungen hat, die die waagrechte untere Seite des ersten Rahmens mit der waagrechten unteren Seite des zweiten umlaufenden Rahmens verbinden.

8. Kraftfahrzeug, **dadurch gekennzeichnet, dass** es eine Hecktür nach einem der vorhergehenden Ansprüche aufweist.

## Claims

1. Trunk lid (1) for a motor vehicle, comprising a structural reinforcement (18), an inner lining (42) and a rear window (4), the structural reinforcement (18) consisting of an upper portion (18a) which defines a rear-window opening and of a lower portion (18b) which extends the upper portion (18a) toward the bottom of the trunk lid (1), **characterized in that** it comprises a structural reinforcement (18) that is made in a single piece of a polymer material, the structural reinforcement (18) being covered on its outside at least by the rear window (4) and with an outer covering panel (6) placed beneath the rear window (4) so as to completely cover the structural reinforcement (18), and **in that** it comprises a structural reinforcement (18) that is completely covered on its inside by the inner lining (42), the structural reinforcement (18) and the inner lining (42) interacting to form a first hollow frame, of a first closed section, surrounding the rear-window opening, and to form a second peripheral hollow frame, of a second closed section, that is close to the outer edges of the trunk lid (1).

2. Trunk lid (1) according to Claim 1, **characterized in that** it comprises a structural reinforcement (18) of which the upper portion (18a) comprises lateral uprights on either side of the rear-window opening, and **in that** it comprises a structural reinforcement (18) and an inner lining (42) which interact to form first and second hollow frames of first and second closed sections, the sections being indistinguishable at the lateral uprights.

3. Trunk lid (1) according to Claim 1 or 2, **characterized in that** it comprises a structural reinforcement (18) of which the upper portion (18a) comprises an upper upright placed above the rear-window opening, and **in that** it comprises a structural reinforcement (18) and an inner lining (42) which interact to form first and second hollow frames of first and second closed sections, the sections being indistinguishable at the upper upright of the rear-window opening.

4. Trunk lid (1) according to any one of the preceding claims, **characterized in that** it comprises a structural reinforcement (18) and an inner lining (42) which interact to form first and second hollow frames of first and second closed sections, said sections comprising on the one hand a portion of hollow shape which belongs to the structural reinforcement (18), of which the concavity is oriented toward the inside of the vehicle, and extended by a connection zone on each side of the hollow shape, and on the other hand, a portion of the inner lining (42), which encloses the portion of hollow shape of the reinforcement (18) by attachment at the connection zones.

5. Trunk lid (1) according to any one of the preceding claims, **characterized in that** it comprises an inner lining (42) which completely covers the structural reinforcement (18), and which comprises a sealing track that is generally continuous designed to interact with a weather seal of the vehicle.

6. Trunk lid (1) according to any one of the preceding claims, **characterized in that** it also comprises, fixedly attached to the structural reinforcement (18) above said window (4), a spoiler (8) made of a polymer material, preferably thermoplastic or thermosetting.

7. Trunk lid (1) according to any one of the preceding claims, **characterized in that** it comprises a structural reinforcement (18) which has additional reinforcements, connecting the lower horizontal side of the first frame to the lower horizontal side of the second peripheral frame.

8. Motor vehicle, **characterized in that** it comprises a trunk lid according to any one of the preceding claims.
